(19) Europäisches Patentamt

European Patent Office

Office européen des brevets

(11) Veröffentlichungsnummer: **0 303 144 B1**

(12) # EUROPÄISCHE PATENTSCHRIFT

(45) Veröffentlichungstag der Patentschrift: **17.06.92**

(21) Anmeldenummer: **88112472.1**

(22) Anmeldetag: **01.08.88**

(51) Int. Cl.⁵: **B01J 12/00**, G21C 19/30, G21C 9/00

Die Akte enthält technische Angaben, die nach dem Eingang der Anmeldung eingereicht wurden und die nicht in dieser Patentschrift enthalten sind.

(54) Vorrichtung zur Rekombination von Wasserstoff und Sauerstoff.

(30) Priorität: **14.08.87 DE 3727207**
**10.05.88 DE 3816012**

(43) Veröffentlichungstag der Anmeldung:
**15.02.89 Patentblatt 89/07**

(45) Bekanntmachung des Hinweises auf die Patenterteilung:
**17.06.92 Patentblatt 92/25**

(84) Benannte Vertragsstaaten:
**BE CH DE ES FR IT LI SE**

(56) Entgegenhaltungen:
**EP-A- 0 089 183**
**US-A- 4 014 984**
**US-A- 4 228 132**
**US-A- 4 374 116**

(73) Patentinhaber: **SIEMENS AKTIENGESELL-
SCHAFT
Wittelsbacherplatz 2
W-8000 München 2(DE)**

(72) Erfinder: **Heck, Reinhard
Kurfürstenstrasse 43
W-6450 Hanau 1(DE)**
Erfinder: **Siegler, Willi, Dr.
Langener Strasse 15
W-6050 Offenbach(DE)**
Erfinder: **Werner, Klaus-Dieter
Kalkensteinstrasse 2
W-6072 Dreieich(DE)**

EP 0 303 144 B1

## Beschreibung

Die Erfindung bezieht sich auf eine Vorrichtung zur Rekombination von Wasserstoff und Sauerstoff mit Hilfe eines Katalysators, vorzugsweise in der Sicherheitshülle eines wassergekühlten Kernreaktors, mit einem vertikal verlaufenden Gehäuse und einem darin angeordneten Katalysatorkörper.

Eine solche Vorrichtung ist durch die EP-A2-0 089 183 bis auf die Erwähnung des bevorzugten Anwendungsgebietes der Sicherheitshülle eines wassergekühlten Kernreaktors bekannt. Ausdrücklich vorgesehen zum Abbau des im Sicherheitsbehälter einer wassergekühlten Kernreaktoranlage eingeschlossenen Wasserstoffs ist dagegen eine andere bekannte Vorrichtung nach der DE-C2-30 04 677, bei der allerdings ein vertikal verlaufendes Gehäuse und ein darin angeordneter Katalysatorkörper nicht vorhanden sind, vielmehr sollen in allen Bereichen des Sicherheitsbehälters, in denen Wasserstoff auftreten kann, (offene) Zündquellen in einem bestimmten Raster angeordnet sein. Als Zündquellen kommen Glühkerzen oder Zündkerzen in Betracht, auch Zündquellen katalytischer Natur. Mit diesen Zündquellen soll der bei einem postulierten Störfall entstehende Wasserstoff bei Erreichen der unteren Zündgrenze abgefackelt werden. Damit ist eine offene Verbrennung gemeint. Das Abfackeln wird in der genannten DE-C2 deswegen als unbedenklich angesehen, weil dabei kurzzeitig entstehende Gaswolkentemperaturen von maximal 500° C keinen Schaden anrichten können. Die Erfindung geht demgegenüber von der Aufgabe aus, die Rekombination von Wasserstoff und Sauerstoff mit Hilfe eines Katalysators in einer Vorrichtung zu ermöglichen, bei der ungerichtete Gaswolken vermieden werden. Dabei soll durch die Erfindung zum einen eine Rekombination von Wasserstoff und Sauerstoff bereits im Bereich nicht zündfähiger Wasserstoffkonzentrationen ermöglicht sein, zum anderen soll die Vorrichtung nach der Erfindung bei Wasserstoffkonzentrationen im zuströmenden Gasgemisch, welche die Zündgrenze erreichen oder überschreiten, als katalytischer Zünder arbeiten können.

Gegenstand der Erfindung ist eine Vorrichtung zur Rekombination von Wasserstoff und Sauerstoff mit Hilfe eines Katalysators der eingangs definierten Art, welche zur Lösung der gestellten Aufgabe dadurch gekennzeichnet ist, daß mit dem Katalysatorkörper Drähte gut wärmeleitend verbunden sind, welche mindestens teilweise aus Katalysatormaterial bestehen, daß die Drähte in einen unterhalb und/oder oberhalb des Katalysatorkörpers gelegenen Freiraum im Inneren des Gehäuses ragen und daß die Stirnseiten des Gehäuses mit druckabhängig und/oder temperaturabhängig öffnenden Verschlüssen versehen sind.

Bei der Vorrichtung nach der Erfindung erfolgt mit Hilfe des Katalysatorkörpers, der als Katalysatormaterial insbesondere Palladium oder Platin aufweist, eine Rekombination bereits im Bereich nicht zündfähiger Wasserstoffkonzentrationen. Bei dieser als "kalte Zündung" bezeichneten Rekombination entsteht zwar auch eine Erwärmung. Diese ist jedoch wesentlich geringer als bei der bekannten Abfackelung. Vor allem bei geringen Wasserstoffanteilen ist die Rekombination mit ihrer Erwärmung auf den Bereich des Katalysatorkörpers beschränkt, und dieser ist durch ein rohrförmiges Gehäuse, das ihn vorteilhaft mit Abstand umgibt, praktisch nach außen abgeschirmt. Dennoch sorgt die Erwärmung für die Anfachung einer Gasströmung, die weiteres Gas durch das Rohr und über den Katalysatorkörper führt, solange das Gas auch nur geringe Prozentanteile Wasserstoff enthält. Die Drähte werden durch die Erwärmung des Katalysatorkörpers ihrerseits aufgeheizt. Sie bilden daher mit ihren freien Enden jeweils eine Zündquelle, mit der das Gas dann, wenn die für eine Zündung ausreichende Konzentration von etwa 4% Wasserstoff erreicht ist, verbrannt wird, bevor es den Katalysatorkörper durchläuft. Auch bei dieser Verbrennung ist eine Abschirmung durch das nach Anspruch 2 bevorzugte rohrförmge Gehäuse gegeben, so daß großräumige Verpuffungen ausgeschlossen sind. Die druckabhängig und/oder temperaturabhängig öffnenden Verschlüsse schützen die im Inneren des Gehäuses angeordneten Katalysatorkörper, wenn die Vorrichtung nicht in Betrieb ist.

Der bekannte Rekombinator nach der US-A 4 228 132 ist nicht gattungsgemäß, denn er weist übereinander gestapelte Heizelemente auf, nicht jedoch Katalysatorkörper; bei ihm sollen Wasserstoff und Sauerstoff unter Bildung von Wasserdampf vereinigt werden, ohne daß Katalysatoren oder funkenerzeugende Einrichtungen dafür benutzt werden. Dies trifft auch zu für eine weitere bekannte Rekombinationseinrichtung nach der DE-C2 30 35 103, wonach in der Sicherheitshülle eines Kernkraftwerks Schächte vorgesehen werden, in denen Heizeinrichtungen eine Gasströmung durch Kaminwirkung in Gang setzen. Diese Schächte, die auch Absperreinrichtungen enthalten können, sollen aber über mindestens die halbe Höhe der Sicherheitshülle, also über 20 m und mehr reichen. Darin sollen Elektroheizungen mit etwa 50 kW Temperaturen von über 600° C erzeugen, um vorhandenen Wasserstoff zu verbrennen. Dagegen sind Vorrichtungen nach der Erfindung, die keine externe Energiezufuhr benötigen und Rohrlängen von höchstens 2 m aufweisen, so klein und leicht zu installieren, daß sie praktisch überall, vor allem auch für Nachrüstungen, günstig eingesetzt werden können.

2

Zur Verbesserung der Katalysatorwirkung kann auch die Innenseite des Rohres mit Katalysatormaterial beschichtet sein. Die dann dort entstehende Erwärmung ist im Vergleich zur Kühlfläche des Rohres gering.

Ferner ist es vorteilhaft, wenn unterhalb des Katalysatorkörpers eine poröse Substanz angeordnet ist, die Silbernitrat enthält. Damit kann erreicht werden, daß die Wirksamkeit des Katalysators nicht durch luftgetragene Katalysatorgifte vermindert wird. Die poröse Substanz kann vorteilhaft ein Keramikkörper sein, der mit Silbernitrat versehen ist, z.B. durch Tauchen in einer Silbernitratlösung.

Die Drähte können durch die poröse Substanz mit Silbernitrat verlaufen.

Der Katalysatorkörper kann eine Wabenstruktur haben und mit Katalysatormaterial beschichtet sein. Dabei kann der Wabenkörper aus einem metallischen oder keramischen Trägermaterial bestehen, das in kubischer oder zylindrischer Form gefertigt wird. Die im Inneren parallel zur Rohrachse verlaufenden Kanäle sind in bekannter Weise mit Palladium oder Platin beschichtet.

Eine andere Ausführungsform des Katalysatorkörpers besteht darin, daß der Katalysatorkörper in Richtung der Rohrachse übereinandergestapelte Drahtnetze umfaßt und daß an einzelnen Kreuzungspunkten der Drahtnetze in Richtung der Rohrachse verlaufende Drähte eingeflochten sind. Die Drahtnetze können vor der Vereinigung oder danach, z.B. galvanisch mit dem Katalysatormaterial, beschichtet werden.

Eine Verringerung der Abmessungen der gesamten Vorrichtung kann man dadurch erreichen, daß der Träger des Katalysatormaterials in an sich bekannter Weise ein Blech ist, daß das Blech an mindestens einem Randbereich gefalzt ist und daß mindestens ein Draht in dem gefalzten Randbereich in wärmeleitendem Kontakt mit dem Blech angeordnet ist, denn es hat sich unerwartet gezeigt, daß bei den zu behandelnden geringen Wasserstoffkonzentrationen schon ebene Bleche mit relativ kleiner Fläche ausreichen, um eine sichere Rekombination zu erreichen. Dabei wird durch die Rekombination eine solche Wärmeentwicklung erzeugt, daß thermisch eine kräftige Gasströmung in Gang gesetzt wird. Die schnelle Erwärmung, die bis zu Temperaturen von 800 °C führen kann, ist dabei umso stärker, je kleiner die durch die Reaktion aufzuheizende Trägermasse ist. Deshalb kann die zur Anfachung einer Gasströmung genutzte Kaminwirkung auch mit relativ kurzen Rohren erreicht werden.

Das Blech kann in zwei parallelen Randbereichen gefalzt und mit je einem Draht versehen sein. Es ergibt sich dann eine günstig herzustellende symmetrische Ausbildung. Vorzugsweise ist das Blech vertikal angeordnet. Der Draht sollte sich dann nach oben und unten über das Blech hinaus erstrecken. Dabei kann der untere Rand des Bleches zu einer Ablaufspitze hin geneigt verlaufen, mit der bei der Rekombination entstehendes Wasser ohne Beeinträchtigung der Drähte abtropfen kann.

Im Hinblick auf die hohen Temperaturen von bis zu 800 °C ist es vorteilhaft, wenn der gefalzte Randbereich durch eine vorzugsweise durch Punktschweißen hergestellte metallurgische Verbindung festgelegt ist. Diese metallurgische Verbindung kann ferner den Wärmeübergang zwischen dem Blech und den Drähten verbessern.

Mit den Verschlüssen an den Enden des Rohres wird sichergestellt, daß die Katalysatorwirkung nicht durch die Umgebungsatmosphäre vermindert wird, bevor eine Rekombination erforderlich ist. Dazu können bekannte Membranen aus einem bei erhöhten Temperaturen schmelzenden Kunststoff vorgesehen sein. Sie geben das Katalysatormaterial frei, wenn bei einem Störfall, bei dem Wasserstoff entsteht, eine erhöhte Temperatur auftritt. Eine andere Möglichkeit besteht darin, daß Membranen durch den bei einem Störfall entstehenden Überdruck zerrissen werden.

Die Verschlüsse können auch vorteilhaft in Form von Bimetallblechen ausgeführt sein. Hier wird die bei Temperaturänderungen entstehende Verformung zum Öffnen von Durchtrittsquerschnitten eingesetzt. Günstigerweise kann der Rohrquerschnitt mit einer Vielzahl von Blechstreifen abgedeckt sein, weil dann schon bei geringen Temperaturänderungen ein großer Querschnitt freigelegt werden kann.

Vorzugsweise sitzt das Blech in einem Rohr, dessen Stirnseiten durch je einen Deckel verschlossen sind, wobei die Deckel unter Federspannung in Öffnungsrichtung stehen und die Federspannung durch eine mit einem Schmelzlot versehene Verbindung aufgenommen wird. Mit dieser Anordnung erhält man eine temperaturabhängige Öffnung des Rohres, durch die der Katalysator im Störungsfall wirksam gemacht wird. Davor ist er gegen Verschmutzung usw. geschützt.

Das Blech kann vorteilhaft in der Mitte des Rohres an einer quer zur Rohrachse verlaufenden Stange befestigt sein. Mit dieser Befestigung erhält man eine nur begrenzte Wärmeabfuhr, so daß die gewünschte hohe Temperatur des Bleches nicht beeinträchtigt wird. Es ist aber auch möglich, andere Befestigungen, z.B. eine Aufhängung zu wählen, die gleichzeitig stabil und wenig wärmeleitend ist.

Zur näheren Erläuterung der Erfindung werden anhand der Zeichnungen Ausführungsbeispiele beschrieben. Dabei zeigen

die FIG 1 eine Vorrichtung nach der Erfindung in einer perspektivischen Darstellung, zum Teil im Schnitt,

die FIG 2 eine andere Ausführungsform des Katalysatorkörpers in einer Ansicht und

die FIG 3 eine dritte Ausführungsform des Katalysatorkörpers ebenfalls in einer Ansicht,

die FIG 4 in einem Vertikalschnitt und

die FIG 5 in einem zugehörigen Horizontalschnitt eine weitere erfindungsgemäße Vorrichtung.

Die erfindungsgemäße Vorrichtung umfaßt ein vertikal verlaufendes Metallrohr 1, z.B. ein Stahlrohr, mit einem Durchmesser von 200 mm und einer Länge von 600 mm. Länge und Durchmesser stehen also im Verhältnis 3:1. Die Wandstärke beträgt etwa 3 mm.

Im oberen Bereich des Rohres 1 ist ein Katalysatorkörper 2 angeordnet, der einen um etwa 30 mm kleineren Durchmesser als der Innendurchmesser des Rohres 1 aufweist. Seine Länge beträgt 150 mm. Der Katalysatorkörper 2 ist mit Vorsprüngen 3 der Rohrinnenwand festgelegt, die dafür sorgen, daß der Wärmeübergang zwischen dem Katalysatorkörper 2 und dem Rohr 1 möglichst gering ist. Die Vorsprünge können punktförmig ausgebildet sein und durch Eindellungen von außen hergestellt werden.

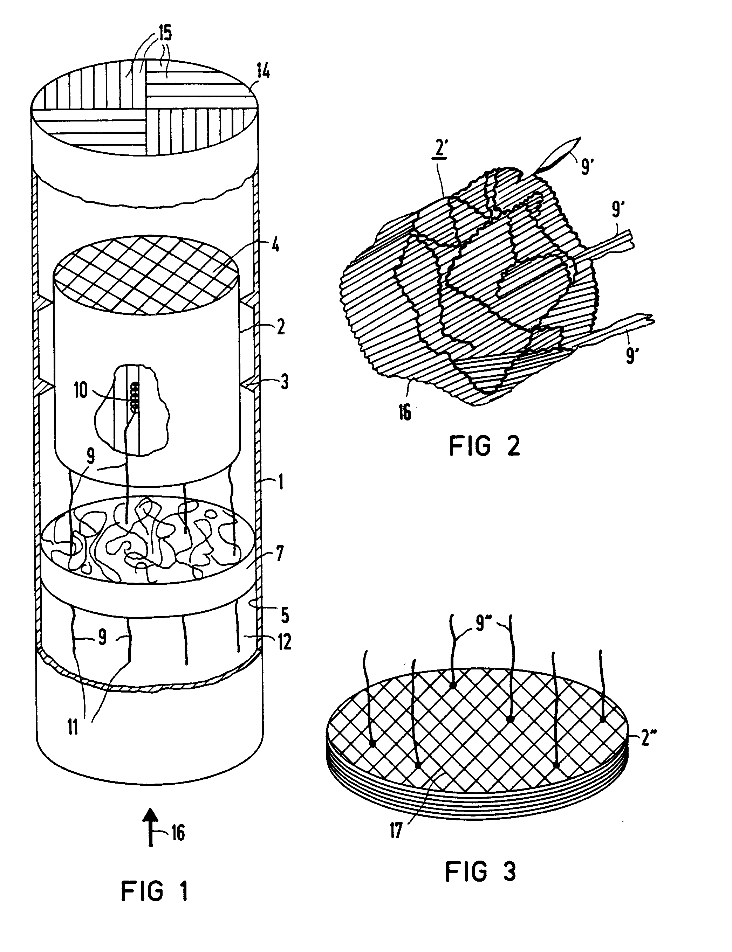

Der Katalysatorkörper 2 besteht beim Ausführungsbeispiel der FIG 1 aus einem Keramikmaterial mit Wabenstruktur, so daß eine Vielzahl von parallel zur Rohrachse verlaufenden Kanälen 4 mit hier quadratischem Querschnitt entsteht. Der Kanalquerschnitt könnte aber auch z.B. dreieckig, sechseckig oder rund sein, solange eine im Verhältnis zum Volumen große Oberfläche erreicht wird. Der Katalysatorkörper ist im Bereich der Kanäle 4 sowie auf seiner Außenseite mit Palladium und/oder Platin als Katalysatormaterial beschichtet. Diese Beschichtung ist auch auf der Innenseite 5 des Rohres 1 angebracht.

Unter dem Katalysatorkörper 2 ist als poröse Substanz 7 ein Keramikkörper vorgesehen, der den Rohrquerschnitt ausfüllt, aber nur 30 mm hoch ist. Er dient zur chemischen Neutralisierung von Katalysatorgiften und ist mit Silbernitrat versehen. Statt des Keramikkörpers könnte auch eine gepreßte Faserstruktur, z.B. in Form von Drahtwolle oder Asbestgewebe, eingesetzt werden. Wichtig ist, daß der Strömungswiderstand relativ klein ist.

In einem Ausschnitt des Katalysatorkörpers 2 ist dargestellt, daß an der Wand eines der Kanäle 4 ein Draht 9 befestigt ist, der ganz oder mindestens teilweise aus Katalysatormaterial besteht. Die Verbindung mit dem Katalysatormaterial soll dort gut wärmeleitend sein. Deshalb ist der Draht 9 an der Befestigungsstelle zu einem Wickel 10 gedreht. Dieser ist mit dem Katalysatormaterial der Wand durch Schweißen, Löten oder auch durch Kleben verbunden.

Wie man sieht, ragen mehrere, über den Rohrquerschnitt verteilte Drähte 9 nach unten durch die poröse Substanz 7 in einen Freiraum 12. In diesen können ihre freien Enden 11 als Zündquellen wirken, die einströmenden Wasserstoff dann zünden, wenn die Wasserstoffkonzentration größer als 4 % ist. Zuvor bewirken katalytische Rekombinationen im Bereich des Katalysatorkörpers 2 eine Aufwärmung des Katalysatorkörpers selbst und der damit in wärmeleitende Verbindung stehenden Drähte 10.

An den Stirnseiten des Rohres 1 sind, wie in der FIG 1 an der Oberseite dargestellt ist, Verschlüsse 14 vorgesehen, die temperaturabhängig öffnen. Beim Ausführungsbeispiel sind in vier Segmenten parallel zueinander verlaufende Bimetallstreifen 15 vorgesehen, die sich bei einer Temperaturänderung nach außen aufwölben und damit eine Gasströmung ermöglichen, die durch die Erwärmung von Gas in dem Rohr 1 angefacht wird. Ein gleicher Verschluß an der unteren Stirnseite ist nicht sichtbar.

Die neue Vorrichtung arbeitet völlig ohne äußere Energiequellen. Sie ist wartungsfrei und kann deshalb an beliebigen Stellen im Inneren der Sicherheitshülle eines wassergekühlten Kernreaktors, insbesondere eines Druckwasserreaktors eingesetzt werden. Bei einem Störfall werden durch die dann auftretenden erhöhten Drücke und Temperaturen die Verschlüsse 14 an dem Rohr 1 geöffnet. Mithin hat das Medium in der Sicherheitshülle Zutritt zum Rohrinneren. In diesem Medium vorhandener Wasserstoff wird mit dem ebenfalls vorhanden Sauerstoff im Bereich des Katalysatorkörpers 2 katalytisch zu Wasser rekombiniert. Bei dieser exothermen Reaktion erwärmt sich der Katalysatorkörper. Dies setzt eine Gasströmung in Gang, die in Richtung des Pfeiles 16 von unten durch das vertikal verlaufende Rohr führt. Damit wird dem Katalysatorkörper 2 neues Medium zugefügt, dessen Wasserstoffgehalt durch Rekombination verringert wird.

Übersteigt der Wasserstoffgehalt die Zündgrenze von 4 %, so führen die mit dem Katalysatorkörper 2 erhitzten Drähte 9 zu einer Zündung, so daß im Bereich des Katalysatorkörpers selbst nur unverbrannte Wasserstoffanteile rekombiniert werden müssen. Durch das Rohr ist dabei sichergestellt, daß die vorgenannte Verbrennung ebenso wie die katalytische Aufheizung in einem abgeschirmten Raum erfolgen und nicht zu unkontrollierten Weiterungen führt.

Beim Ausführungsbeispiel nach FIG 2 ist der Katalysatorkörper 2' ein Wickel aus einem Blechstreifen 16, der, wie die Figur zeigt, in Richtung der Wickelachse mit Längssicken profiliert ist. Der Blechwickel 2 ist mit Katalysatormaterial versehen. Dies erstreckt sich auch auf die Vorsprünge des Wickels, die als Zünddrähte 9' wirken.

Bei dem Ausführungsbeispiel nach FIG 3 besteht der Katalysatorkörper 2" aus übereinandergestapelten Drahtnetzen 17 mit dem aus der Figur ersichtlichen Kreisquerschnitt. In die Drahtnetze sind quer zur Netzebene verlaufende Zünddrähte 9 eingefloch ten. Netze 17 und Zünddrähte 9 können gemeinsam mit Katalysatormaterial beschichtet werden.

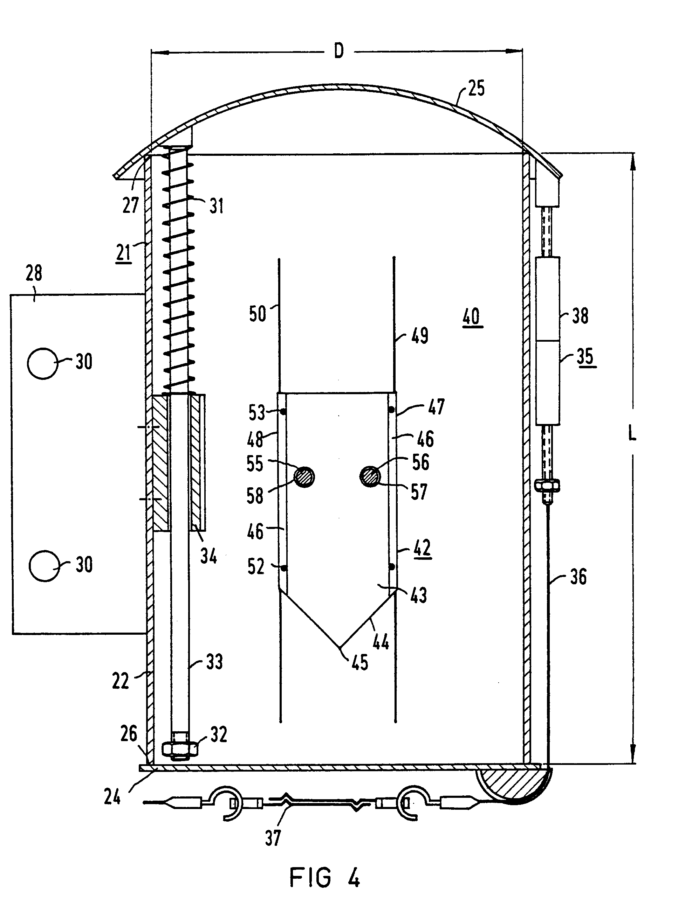

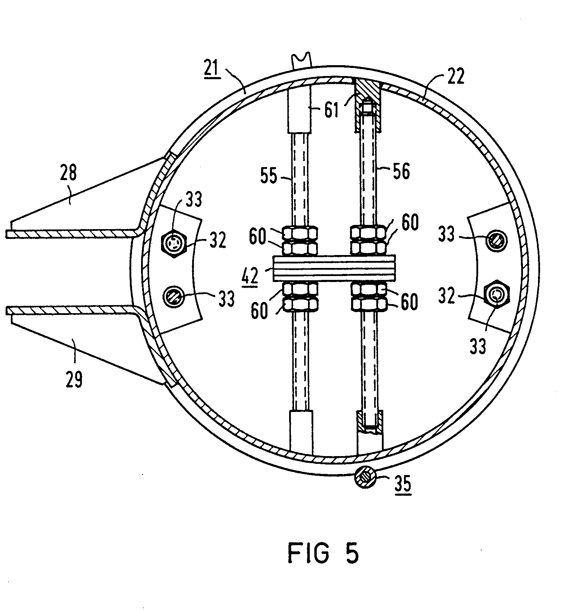

Die erfindungsgemäße Vorrichtung nach FIG 4 und 5 umfaßt ein Gehäuse 21, das aus einem Stahlrohr 22 mit einem Durchmesser D von z.B. 100 mm und einer Länge L von z.B. 180 mm und den Deckeln 24 und 25 an den beiden Stirnseiten 26, 27 besteht. An der in den Figuren linken Seite des Gehäuses 1 sind zwei Befestigungswinkel 28 und 29 mit Schraubenlöchern 30 darin befestigt. Damit kann das Gehäuse 21 an einer Konsole oder einem Träger im Inneren der Sicherheitshülle eines wassergekühlten Kernreaktors befestigt werden.

Der Boden 24 und der Deckel 25 stehen unter der Wirkung von Federn 31, die sie auseinander und damit von den Stirnseiten 26, 27 wegzudrükken versuchen. Die Größe der Bewegung ist durch eine Mutter 32 auf dem die Feder 31 tragenden Bolzen 33 begrenzt. In der Fig. 1 ist nur eine auf den Deckel 25 wirkende Feder 31 gezeichnet, die auf den Deckel 24 wirkenden Federn 31 sitzen bei sonst gleicher Ausbildung unterhalb der Führung 34.

Gegen diese Federkraft wirkt eine Verspannung 35, die einen Draht 36 mit einer Schmelzlotsicherung 37 umfaßt. Die Schmelzlotsicherung 37 hat z.B eine Ansprechtemperatur von 70 °C. Mit dem Läsen der Verspannung, die mit einem Schloß 38 einstellbar ist, wird dann das Rohrinnere 40 freigelegt und mit der Außenluft in Verbindung gebracht.

In der Mitte des Rohrquerschnitts ist, wie die FIG 2 zeigt, ein Katalysatorkörper 42 angeordnet. Er umfaßt ein vertikal verlaufendes ebenes Blech 43 mit weitgehend rechteckigem Querschnitt, dessen Breite 40 mm und dessen Länge etwa 75 mm beträgt. Der untere Rand 44 läuft zu einer Spitze 45 aus, wobei die Neigung der Flanken 45° beträgt.

Das Blech 43 besteht aus nichtrostendem Stahl als Katalysatorträger und ist mit Platin beschichtet. Seine parallelen Randbereiche 47 und 48 sind mit einer Breite von einigen mm umgefalzt. In den gefalzten Bereich 46 sind Platindrähte 49 und 50 eingelegt, die um etwa 40 mm nach oben und nach unten aus dem Blech 43 herausragen. An mindestens zwei Stellen 52 und 53 im unteren und oberen Bereich des Bleches 43 sind die Falzungen 46 durch Punktschweißungen festgelegt, wobei sich auch eine gut wärmeleitende Verbindung der Drähte 49 und 50 mit dem Blech 43 ergibt.

Wie man sieht, ist das Blech 43 mit zwei quer zur Rohrachse verlaufenden Stäben 55 und 56 befestigt, die durch Bohrungen 57 und 58 des Bleches 43 fuhren. Dort ist das Blech 43 mit Mutern 60 festgespannt, die paarweise angeordnet und damit gekontert sind. Die Stäbe 55, 56 sitzen in Gewindebuchsen 61, die in das Rohr 22 engeschweißt sind.

**Patentansprüche**

1. Vorrichtung zur Rekombination von Wasserstoff und Sauerstoff mit Hilfe eines Katalysators, vorzugsweise in der Sicherheitshülle eines wassergekühlten Kernreaktors, mit einem vertikal verlaufenden Gehäuse (1; 21) und einem darin angeordneten Katalysatorkörper (2; 42),
   **dadurch gekennzeichnet,**
   daß mit dem Katalysatorkörper (2; 42) Drähte (9; 49, 40) gut wärmeleitend verbunden sind, welche mindestens teilweise aus Katalysatormaterial bestehen,
   daß die Drähte (9; 49, 50) in einen unterhalb und/oder oberhalb des Katalysatorkörpers (2; 42) gelegenen Freiraum (12) im Inneren des Gehäuses (1; 21) ragen und
   daß die Stirnseiten des Gehäuses (1; 21) mit druckabhängig und/oder temperaturabhängig öffnenden Verschlüssen (14; 24, 25) versehen sind.

2. Vorrichtung nach Anspruch 1,
   **dadurch gekennzeichnet,** daß der Katalysatorkörper (2) mit Abstand zur Rohrinnenwand (5) eines rohrförmigen Gehäuses (2;21) angeordnet ist.

3. Vorrichtung nach Anspruch 1 oder 2,
   **dadurch gekennzeichnet,** daß die Innenseite (5) des rohrförmigen Gehäuses (1; 21) mit Katalysatormaterial beschichtet ist.

4. Vorrichtung nach Anspruch 1, 2 oder 3,
   **dadurch gekennzeichnet,** daß unterhalb des Katalysatorkörpers (2) eine poröse Substanz (7) angeordnet ist, die Silbernitrat enthält.

5. Vorrichtung nach Anspruch 4,
   **dadurch gekennzeichnet,** daß die poröse Substanz (7) ein Keramikkörper ist, der mit Silbernitrat versehen ist.

6. Vorrichtung nach Anspruch 4 oder 5,
   **dadurch gekennzeichnet,** daß die Drähte (9) durch die poröse Substanz (7) verlaufen.

7. Vorrichtung nach einem der Ansprüche 1 bis 6,
   **dadurch gekennzeichnet,** daß der Katalysatorkörper (2) eine Wabenstruktur hat und mit Katalysatormaterial beschichtet ist.

8. Vorrichtung nach einem der Ansprüche 1 bis 7,
   **dadurch gekennzeichnet,** daß der Katalysatorkörper (2,'') in Richtung des rohrförmigen Gehäuses (1) übereinandergestapelte Drahtnetze (17) umfaßt und daß an einzelnen Kreuzungspunkten der Drahtnetze (17) in Richtung der Achse verlaufende Drähte (9'') eingeflochten sind.

9. Vorrichtung nach Anspruch 1,
   **dadurch gekennzeichnet,** daß der Katalysatorkörper (42) ein Blech (43) ist, daß das Blech (43) an mindestens einem Randbereich (47, 48) gefalzt ist und daß mindestens ein Draht (49, 50) in dem gefalzten Randbereich (47, 48) in wärmeleitendem Kontakt mit dem Blech (43) angeordnet ist.

10. Vorrichtung nach Anspruch 9,
    **dadurch gekennzeichnet,** daß das Blech (43) in zwei parallelen Randbereichen (47, 48) gefalzt und mit je einem Draht (49, 50) versehen ist.

11. Vorrichtung nach Anspruch 9 oder 10,
    **dadurch gekennzeichnet,** daß das Blech (43) vertikal angeordnet ist und daß sich der Draht (49, 50) nach oben und unten über das Blech (43) hinaus erstreckt.

12. Vorrichtung nach Anspruch 11,
    **dadurch gekennzeichnet,** daß der untere Rand (44) des Bleches zu einer Ablaufspitze (45) hin geneigt verläuft.

13. Vorrichtung nach einem der Ansprüche 10 bis 12, **dadurch gekennzeichnet,** daß der gefalzte Randbereich (47, 48) durch eine vorzugsweise durch Punktschweißen hergestellte metallurgische Verbindung (52, 53) festgelegt ist.

14. Vorrichtung nach einem der Ansprüche 1 bis 13,
    **dadurch gekennzeichnet,** daß als Verschlüsse (14) Membranen aus einem bei erhöhten Temperaturen schmelzenden Kunststoff vorgesehen sind.

15. Vorrichtung nach einem der Ansprüche 1 bis 14,
    **dadurch gekennzeichnet,** daß als Verschlüsse (14) Bimetallbleche vorgesehen sind.

16. Vorrichtung nach Anspruch 15,
    **dadurch gekennzeichnet,** daß der Querschnitt des rohrförmigen Gehäuses (1) mit einer Vielzahl von Blechstreifen (15) abgedeckt ist.

17. Vorrichtung nach einem der Ansprüche 1 bis 13,
    **dadurch gekennzeichnet,** daß das Blech (43) in einem Rohr (22) sitzt, dessen Stirnseiten (26, 27) durch je einen Deckel (24, 25) verschlossen sind, daß die Deckel (24, 25) unter Federspannung (31) in Öffnungsrichtung stehen und daß die Federspannung (31) durch eine mit einem Schmelzlot (37) versehene Verbindung (35) aufgenommen wird.

18. Vorrichtung nach Anspruch 9,
    **dadurch gekennzeichnet,** daß das Blech (43) in der Mitte des Gehäuses (22) an einer quer zur Rohrachse verlaufenden Stange (55, 56) befestigt ist.

19. Vorrichtung nach einem der Ansprüche 1, 3, 7, 8 oder 9,
    **dadurch gekennzeichnet,** daß das Katalysatormaterial für die Katalysatorkörper (2; 42) einschließlich der Drähte (9; 49, 50) aus Platin und/oder Palladiumschichten besteht.

**Claims**

1. Device for the recombination of hydrogen and oxygen with the aid of a catalyst, preferably in the safety casing of a water-cooled nuclear reactor, having a vertically-extending housing (1; 21) and a catalyst body (2; 42) disposed therein,
   **characterised in that**
   wires (9; 49, 40) are connected in thermally well-conducting manner to the catalyst body (2; 42) and which wires at least partially comprise catalyst material,
   in that the wires (9; 49, 50) protrude into a free space (12) disposed below and/or above the catalyst body (2; 42) inside the housing (1; 21) and
   in that the end faces of the housing (1; 21) are provided with seals (14; 24, 25) which open in dependence on pressure and/or temperature.

2. Device according to claim 1,
   **characterised in that**
   the catalyst body (2) is disposed at a distance from the tube inner wall (5) of a tubular housing (1; 21).

3. Device according to claim 1 or 2,
   **characterised in that**
   the inner wall (5) of the tubular housing (1; 21) is coated with catalyst material.

**4.** Device according to claim 1, 2 or 3,
**characterised in that**
a porous substance (7) containing silver nitrate is disposed below the catalyst body (2).

**5.** Device according to claim 4,
**characterised in that**
the porous substance (7) is a ceramic body which is provided with silver nitrate.

**6.** Device according to claim 4 or 5,
**characterised in that**
the wires (9) extend through the porous substance (7).

**7.** Device according to one of claims 1 to 6,
**characterised in that**
the catalyst body (2) has a honeycomb structure and is coated with catalyst material.

**8.** Device according to one of claims 1 to 7,
**characterised in that**
the catalyst body (2,") includes wire meshes (17) stacked one above the other in the direction of the tubular housing (1), and in that wires (9") extending in the axial direction are interwoven at individual intersections of the wire meshes (17).

**9.** Device according to claim 1,
**characterised in that**
the catalyst body (42) is a sheet (43), in that the sheet (43) is folded at at least one edge region (47, 48) and in that at least one wire (49, 50) is disposed in thermally-conductive contact with the sheet (43) in the folded edge region (47, 48).

**10.** Device according to claim 9,
**characterised in that**
the sheet (43) is folded in two parallel edge regions (47, 48) and is provided in each case with a wire (49, 50).

**11.** Device according to claim 9 or 10,
**characterised in that**
the sheet (43) is disposed vertically and in that the wire (49, 50) extends upwards and downwards beyond said sheet (43).

**12.** Device according to claim 11,
**characterised in that**
the lower edge (44) of the sheet extends in inclined manner to a run-off point (45).

**13.** Device according to one of claims 10 to 12,
**characterised in that**
the folded edge region (47, 48) is fixed by a metallurgical bond (52, 53) preferably produced by spot welding.

**14.** Device according to one of claims 1 to 13,
**characterised in that**
membranes of a plastic which melts at high temperatures are provided as seals (14).

**15.** Device according to one of claims 1 to 14,
**characterised in that**
bimetallic sheets are provided as seals (14).

**16.** Device according to claim 15,
**characterised in that**
the cross-section of the tubular housing (1) is covered by a plurality of sheet metal strips (15).

**17.** Device according to one of claims 1 to 13,
**characterised in that**
the sheet (43) is seated in a tube (22) whose end faces (26, 27) are each closed by a cap (24, 25), in that the caps (24, 25) are spring-biased (31) in an opening direction, and in that the spring biasing (31) is absorbed by a bond (35) provided with solder (37).

**18.** Device according to claim 9,
**characterised in that**
the sheet (43) is secured in the middle of the housing (22) on a bar (55, 56) extending transversely to the tube axis.

**19.** Device according to one of claims 1, 3, 7, 8 or 9,
**characterised in that**
the catalyst material for the catalyst body (2; 42) including the wires (9; 49, 50) comprises platinum and/or palladium layers.

**Revendications**

**1.** Dispositif de recombinaison de l'hydrogène et de l'oxygène à l'aide d'un catalyseur, de préférence dans l'enceinte de confinement d'un réacteur nucléaire à refroidissement par de l'eau, comprenant un boîtier (1;21) s'étendant verticalement et un corps de catalyseur (2;42) qui y est disposé,
caractérisé
en ce qu'au corps de catalyseur (2,42) sont reliés, de manière à bien conduire la chaleur, des fils (9;49,40) constitués au moins partiellement en la matière du catalyseur; en ce que les fils (9;49,50) pénètrent à l'intérieur du boîtier (1;21) dans un espace libre (12) situé en-dessous et/ou au-dessus du corps de catalyseur (2;42), et

en ce que les côtés frontaux du boîtier (1;21) sont munis de fermetures (14;24,25) qui s'ouvrent en fonction de la pression et/ou de la température.

2.  Dispositif suivant la revendication 1, caractérisé en ce que le corps de catalyseur (2) est disposé à distance de la paroi intérieure (5) d'un boîtier (2;21) tubulaire.

3.  Dispositif suivant la revendication 1 ou 2, caractérisé en ce que le côté intérieur (5) du boîtier tubulaire (1;21) est revêtu de matière constituant le catalyseur.

4.  Dispositif suivant la revendication 1, 2 ou 3, caractérisé en ce qu'en-dessous du corps de catalyseur (2) est disposée une substance (7) poreuse qui contient du nitrate d'argent.

5.  Dispositif suivant la revendication 4, caractérisé en ce que la substance (7) est un corps céramique qui est muni de nitrate d'argent.

6.  Dispositif suivant la revendication 4 ou 5, caractérisé en ce que les fils (9) passent à travers la substance (7) poreuse.

7.  Dispositif suivant l'une des revendications 1 à 6, caractérisé en ce que le corps de catalyseur (2) présente une structure en nid d'abeille et est revêtu de la matière constituant le catalyseur.

8.  Dispositif suivant l'une des revendications 1 à 7, caractérisé en ce que le corps de catalyseur (2) comporte des toiles métalliques (17) empilées les unes au-dessus des autres dans la direction du boîtier tubulaire (1) et en ce qu'aux points de croisement des toiles métalliques (17) sont entrelacés des fils (9") s'étendant dans la direction de l'axe.

9.  Dispositif suivant la revendication 1, caractérisé en ce que le corps de catalyseur (42) est une tôle (43), en ce que la tôle (43) est repliée sur au moins une partie marginale (47,48), et en ce qu'au moins un fil (49,50) est disposé dans la partie marginale (47,48) repliée en étant en contact de conduction de chaleur avec la tôle (43).

10. Dispositif suivant la revendication 9,

caractérisé en ce que la tôle (43) est repliée dans deux parties marginales (47,48) parallèles, qui sont chacune munies d'un fil (49,50).

11. Dispositif suivant la revendication 9 ou 10, caractérisé en ce que la tôle (43) est disposée verticalement et que le fil (49,50) s'étend vers le haut et vers le bas au-delà de la tôle (43).

12. Dispositif suivant la revendication 11, caractérisé en ce que le bord inférieur (44) de la tôle s'étend de manière inclinée vers une pointe de sortie (45).

13. Dispositif suivant l'une des revendications 10 à 12, caractérisé en ce que la partie marginale (47,48) repliée est immobilisée par une liaison (52,53) métallurgique obtenue, de préférence, par soudure par points.

14. Dispositif suivant l'une des revendications 1 à 13, caractérisé en ce que, comme fermetures (14), sont prévues des membranes en une matière plastique fondant à haute température.

15. Dispositif suivant l'une des revendications 1 à 14, caractérisé en ce que, comme fermetures (14), sont prévues des tôles bimétalliques.

16. Dispositif suivant la revendication 15, caractérisé en ce que la section transversale du boîtier (1) tubulaire est recouverte d'un grand nombre de bandes de tôle (15).

17. Dispositif suivant l'une des revendications 1 à 13, caractérisé en ce que la tôle (43) est disposée dans un tube (22) dont les côtés frontaux (26,27) sont fermés respectivement par des couvercles (24,25), en ce que les couvercles (24,25) sont soumis à la tension d'un ressort (31) dans le sens de l'ouverture, et en ce que la tension du ressort (31) est absorbée par une liaison (35) munie d'une brasure fusible (37).

18. Dispositif suivant la revendication 9, caractérisé en ce que la tôle (43) est fixée au milieu du boîtier (22) à une barre (55,56) s'étendant transversalement à l'axe du tube.

19. Dispositif selon l'une des revendications 1, 3, 7, 8 ou 9, caractérisé en ce que le matériau constituant le catalyseur du corps de catalyseur (2;42) est, y compris les fils (9; 49, 50), constitué de couches de platine et/ou de palladium.

FIG 1

FIG 2

FIG 3

9

FIG 4

FIG 5